# EUROPEAN PATENT SPECIFICATION

(11) **EP 0 720 135 B1**
(45) Date of publication and mention of the grant of the patent: **31.08.2005**
(21) Application number: 95116876.4
(22) Date of filing: 26.10.1995
(51) Int. Cl.: G07G 1/12, G07G 1/00

(54) **Information processing apparatus**
Informationsverarbeitungsgerät
Dispositif de traitement d'informations

(30) Priority: 27.10.1994 JP 26401694
(43) Date of publication of application: 03.07.1996
(73) Proprietor: SEIKO EPSON CORPORATION, Tokyo 163-0811 (JP)
(72) Inventor: Kasai, Kazuaki, c/o Seiko Epson Corp., Suwa-shi, Nagano-ken, 392 (JP); Ito, Ikuo, c/o Seiko Epson Corp., Suwa-shi, Nagano-ken, 392 (JP); Kinoshita,Yoshiki, c/o Seiko Epson Corp., Suwa-shi, Nagano-ken, 392 (JP)
(74) Representative: Hoffmann, Eckart

(56) References cited:
- EP-A- 0 654 767
- US-A- 4 841 412
- US-A- 5 311 397
- PATENT ABSTRACTS OF JAPAN vol. 015, no. 510 (E-1149) 25 December 1991 & JP 03 224 298 A (SEIKO EPSON CORP) 03 October 1991

## Description

The present invention relates to an information processing apparatus including a personal computer (PC) and a printer. More particularly, the present invention relates to an information processing apparatus suitable for a POS station, etc.

POS stations installed on the accounting counter of a supermarket or a department store comprise a drawer for cash management, a printer for printing receipts, a display for showing an amount to be paid, a keyboard for operation, and a PC for controlling these devices. More recently, POS stations have begun to be connected to an increasing number of other devices, such as credit card readers, bar code readers, and MICR readers for reading magnetic ink characters printed on personal checks. Consequently, the installation of a POS station requires a larger area. Furthermore, the many devices installed around the operator lower operational efficiency and adversely affect the appearance of the counter area. Space is also required for cables to connect all of these devices, and the routing of these cables is cumbersome and makes apparatus maintenance and device replacement difficult.

To minimize the space requirement, some all-in-one type POS stations integrate all of the above-mentioned devices into a single unit. However, because all of the devices are contained inside a single housing, maintenance of such POS stations becomes difficult. For example, operation of the entire apparatus is interrupted even if only the printer stops working, or the entire apparatus becomes unusable while a faulty device is being repaired. Furthermore, if a need arises to add functions, such as communication functions, that were not considered during the initial design, the entire apparatus must be updated. Such a step would require huge expense since all POS stations within a single store location must generally possess identical specifications.

US-A-4,841,412 discloses an electronic terminal device comprising: a combined base and wall structure for said terminal device, said wall structure including two side walls, a front wall and a rear wall, said side walls each having an inclined portion extending upwardly from said front wall to a point and a horizontal portion extending from said point to said rear wall; a top member positioned on the horizontal portions of the side walls and on the rear wall; a keyboard module positioned over the inclined portions of the side walls and over the front wall; a power supply having a housing positioned on said base within said terminal adjacent said rear wall; an electronics assembly positioned within said terminal adjacent said power supply and provided with a plurality of extensions which engage apertures in the housing of said power supply and retain said electronics assembly and said power supply in position and provide electrical connection between said power supply and said electronics assembly; and resilient securing means releasably retaining said electronics assembly in position on said base within said terminal device. A printer access door is snapped into the base. When an integrated printer for the terminal is required, the printer access door is removed, providing cable access to the internal electronics of the terminal.

US-5,311,397 discloses an information processing apparatus according to the pre-characterizing portion of claim 1. More particularly, this prior art discloses a computer assembly comprised of a plurality of modular units which are readily connectable by pluggable terminals to permit quick interchangeability and/or replacement of certain units by untrained and unskilled personnel. The computer assembly includes a docking bay module provided with a number of external connectors for connection to equipment such as a keyboard, printer, cash register, etc., and a power supply plug. A CPU module containing the logic circuitry is slidably mounted in and out of the docking bay module and is readily connected by mating pluggable terminals to the various equipment linked to the external connectors on the docking bay module. A peripheral bay module may be added to the docking bay and CPU modules to function as a file server station in a local area network environment.

JP-A-03-224298 discloses a device for grounding a circuit board while the circuit board is being inserted into an apparatus. Two spring members are provided opposite to each other with a space in between into which the circuit board is inserted. Each spring member contacts a respective protrusion on the circuit board thereby establishing a grounding connection between the circuit board and the ground of the apparatus.

It is an object of the present invention to reduce the space requirement of a POS station by integrating into a small space, the PC and the printer, which constitute the essential components of a POS station.

It is an additional object of the present invention to provide an information processing apparatus for which work interruption can be minimized even when a device failure occurs, by shortening the time required for device replacement.

It is a further object of the present invention to provide an information processing apparatus that can flexibly and quickly accommodate the addition or enhancement of new functions.

It is also an object of the present invention to provide an information processing apparatus that maintains a high level of reliability despite its compact size, and in which various safety measures have been implemented in order to prevent failures or recording errors.

These objects are achieved with an information processing apparatus as claimed in claim 1. Preferred embodiments of the invention are subject-matter of the dependent claims.

By housing a printer unit and a PC module separately in top and bottom housings, respectively, on the one hand, both the printer unit and the PC module can be positioned on an area occupied by only the printer so far. On the other hand, this arrangement allows separate maintenance and replacement of the printer unit and the PC module.

Because the PC module can be detached in the forward or backward direction, maintenance and functional enhancements of the PC module can be made without removing the housing with the printer unit. Consequently, there is no need to remove the top housing, or to move other devices of the POS station.

When the PC module is mounted to the bottom housing while the top and bottom housings are connected to each other, grounding means electrically connects the printer unit to the case of the PC module, thus suppressing electrostatic noise, etc. Furthermore, grounding is achieved even if an oil film or dust is present because the grounding means slides on a contact surface during the insertion of the PC module. Therefore, the printer unit is securely grounded, improving the reliability of the apparatus.

Additionally, since the grounding means possesses elasticity, it can lessen the load during the sliding motion, enabling smooth insertion or extraction of the PC module. Furthermore, even if the gap between the printer unit and the case of the PC module changes due to play in the installation position, the grounding means elastically alters its shape to absorb the changes, thus achieving secure conduction.

If the grounding means is subjected to a compressive force, it will be deformed with the free end of its M like shape making sliding movements. Consequently, the sliding resistance of the free end has the effect of increasing the deformation load, i.e., the contact load applied to the contact portion. Furthermore, if semi-spherical protrusions are provided in the top area of the M shape, the area of contact portion can be reduced, thus increasing the contact pressure at the contact portion. This increased pressure contributes to remove oil and oxidation films on the contact surface, resulting in excellent and reliable contact.

According to one embodiment, because the connector on an interface cable side is housed inside the bottom housing, the connector is protected and no limitations are encountered when installing the information processing apparatus close to a wall.

Preferably, both the fastening of the PC module's case to the bottom housing and the prevention of the opening of a lid of the second housing can be implemented using a single locking mechanism.

By using an electrically conductive locking mechanism, when an operator needs to perform maintenance operations by extracting the PC module, the operator and the case of the PC module assume the same electrical potential, thus preventing electrostatic damage to components and the destruction of memory content.

As explained above, the information processing apparatus of the present invention enables compact integration of a printer and a PC and, thus, is particularly suited to be installed in the small area of a POS station which requires these devices. Furthermore, despite the fact that these devices are integrated into a compact unit, the individual devices can still be easily removed, realizing the same ease of maintenance as in conventional stand-alone type instruments. Consequently, inspections and repairs can be performed quickly and simply. Additionally, the reliability of the apparatus is further improved through the implementation of protection means against electrostatic discharges.

Furthermore, because the information processing apparatus related to the present invention uses a PC module high in general applicability and expendability, functions can be easily selected and added according to the user's needs, and future functional enhancements can be flexibly incorporated. Therefore, the user will be able to quickly and inexpensively implement information processing apparatuses that possess functions ideally suited to the intended application, and furthermore will be able to cope with future business expansions and the connection of peripheral devices, by effectively using the installed devices.

Preferred embodiments of the invention will be described below with reference to the drawings, in which:
- Fig. 1: is a front perspective view of a first embodiment of the information processing apparatus according to the present invention;
- Fig. 2: is a rear perspective view of the first embodiment;
- Fig. 3: is a front plan view of the first embodiment;
- Fig. 4: is a view similar to Figure 1 with a lid on the front side of the lower housing opened;
- Fig. 5: is a view similar to Figure 4 with the top housing separated from the bottom housing;
- Fig. 6: is a lateral view of the apparatus of Figure 1 showing the internal components inside the housings;
- Fig. 7: is a top perspective view of the bottom housing with the PC module;
- Fig. 8: is a view similar to Figure 7 with the PC module taken out of the bottom housing;
- Fig. 9: is a top perspective view of the PC module showing the assembly of an expansion input/output unit;
- Fig. 10: is an enlarged view of a contact plate;
- Fig. 11: is a perspective view of the PC module with a top cover of its case removed;
- Fig. 12: is a view similar to Figure 4 of a second embodiment of the present invention; and
- Fig. 13: is a view similar to Figure 8 of the second embodiment of the present invention.

### Embodiment 1

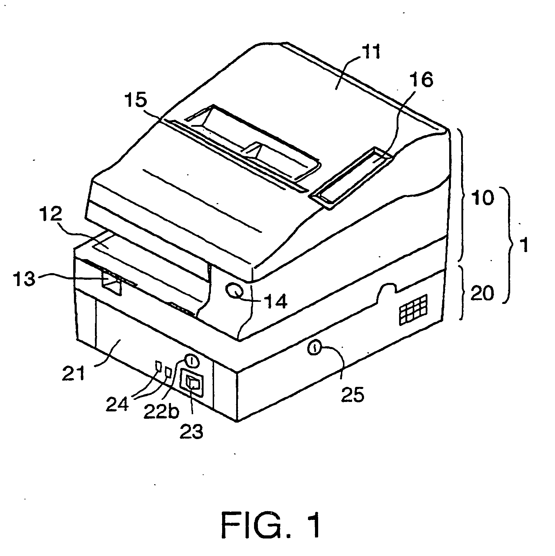

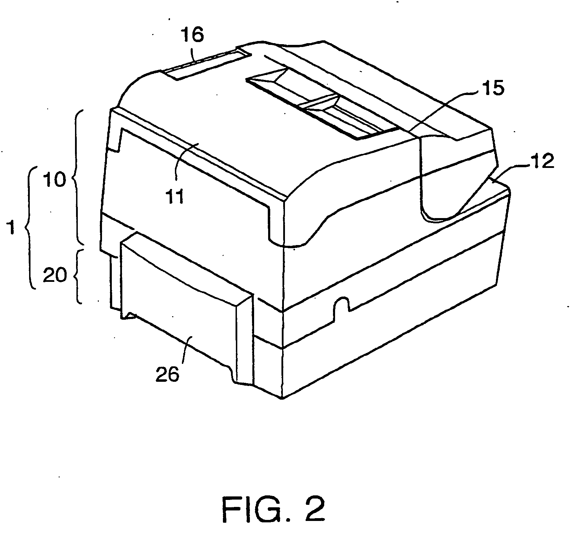

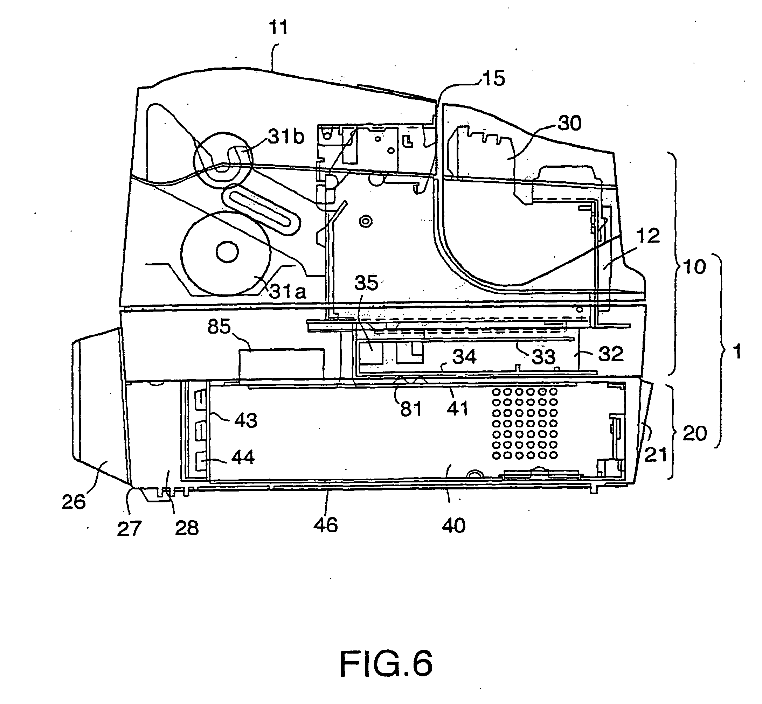

FIG. 1 shows an information processing apparatus 1 according to a first embodiment of the present invention as viewed from the front, and FIG. 2 shows the rear side of the apparatus. Apparatus 1 of the first embodiment is substantially rectangular in shape, slightly deeper than wide, and comprises top housing 10 including a printer unit and bottom housing 20 including a personal computer (PC) module. The printer unit in top housing 10 is adapted to print journals and receipts on two rolls of paper, respectively, and to print information on single slips. The rolls of paper for journal and receipt printing are housed in rear housing section 11 (see Fig. 6) while slips are individually inserted through an insertion opening 12 located on the front side of the housing 20. A printer power switch 13 and a mode selection switch 14 are provided on the front side of top housing 10. A discharge opening 15 for discharging roll paper and individual slips, as well as a display device 16 which indicates the operating status of the apparatus, are located on the upper side of top housing 10.

Bottom housing 20 is located below top housing 10 and both are designed to possess similar "footprints", i.e., the shape of the top of the bottom housing substantially matches that of the bottom of the top housing. Apparatus 1 of the first embodiment can, thus, be installed if an area large enough for the printer is available. Furthermore, top housing 10 and bottom housing 20 are designed so as to appear and to be treated as a single unit when combined. Naturally, in accordance with the objects of the present invention, the bottom shape of bottom housing 20 need not be identical to that of top housing 10, and may be smaller than the bottom shape of top housing 10 as long as the external appearance of the apparatus is not adversely affected.

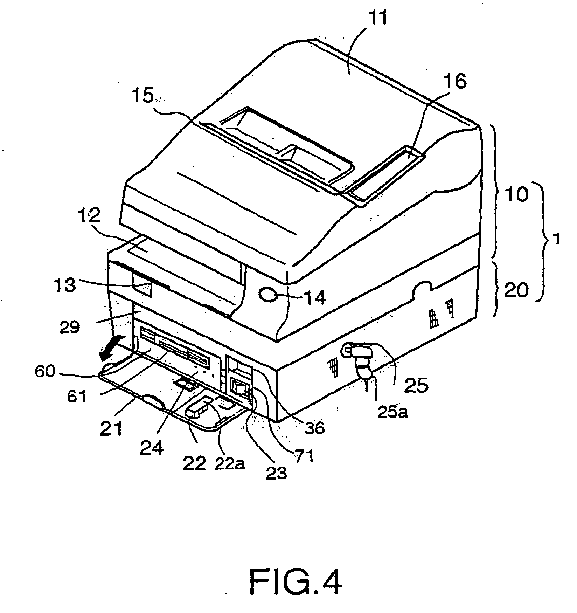

A lid 21 is pivotally mounted on the front side of bottom housing 20 and is movable between a closed position shown in Fig. 1 and an opened position shown in Fig. 4. Lid 21 is provided with a locking mechanism 22 which is operated by inserting and turning a key in a key hole 22b. As will be explained later the key is preferably made of an electrically conductive material. A power switch 23 of the PC module is arranged so that it can be operated through a cutout in lid 21 when the latter is in its closed position. In a similar manner, a window in lid 21 exposes a lamp 24 allowing the operating status of the PC module to be checked while the lid 21 is closed.

A key hole 25 for operating a locking mechanism which connects top housing 10 to bottom housing 20, is installed on the right side of bottom housing 20. Furthermore, a back cover 26 is installed on the back side of bottom housing 20, and the ends of connector cables for connecting apparatus 1 to other apparatuses are covered by back cover 26. Back cover 26 is detachably installed so as to be removed for installation or disconnection of cables.

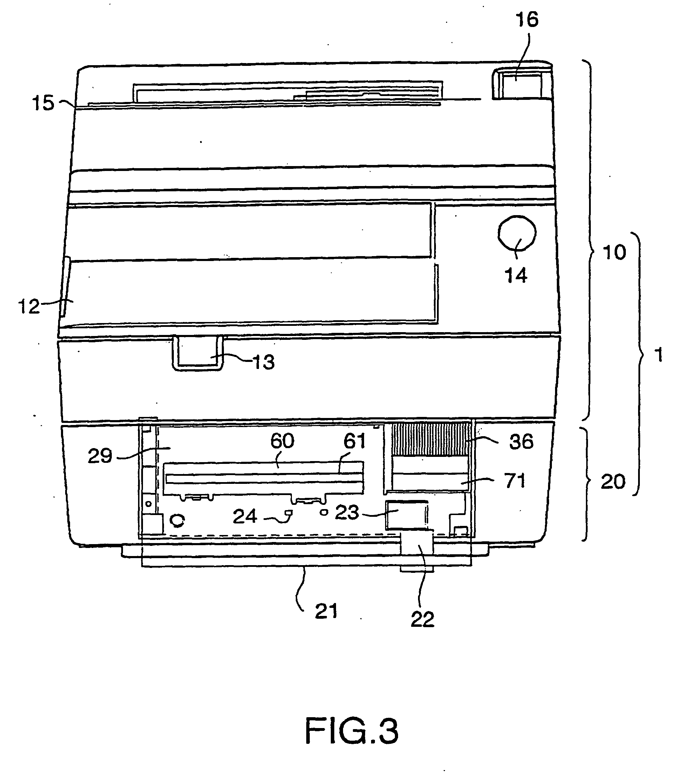

FIG. 3 is a front plan view of the apparatus 1 of the first embodiment. As shown in the figure, when lid 21 is opened by releasing the locking mechanism 22, a front panel 29 is exposed which is connected to bottom housing 20. A floppy disk can be inserted in or removed from slot 61 of a disk drive unit 60 of the PC module through said front panel 29.

FIG. 6 shows the major internal components located on the left side of apparatus 1. A printer mechanism 30 which includes a motor and a print head is arranged at the front of top housing 10, a compartment 31a for accommodating the paper rolls for journal and receipt printing is provided in the lower rear part of the housing, and a take-up mechanism 31b is located in the upper rear part and takes up printed paper. A control module 32 which contains electronic components for controlling the individual mechanisms is installed below printer mechanism 30. Components such as a control board 33 are installed inside control module 32 so as to be accessible through the bottom thereof. The PC module comprises a case 40 which is removably inserted in bottom housing 20. When the PC module is removed in the manner to be explained below, control module 32 can be checked or repaired, or components can be replaced from the bottom side of top housing 10, after simply extracting a bottom cover 34 installed on the bottom of said control module 32. Control module 32, including bottom cover 34, is made of sheet metal to serve as a shield for preventing the entry and radiation of electromagnetic noise. The printer mechanism is grounded to control module 32.

Connectors 35 are provided at the rear side of control module 32, and are used for connecting the printer unit to other devices when the printer unit is disconnected from the PC module of this embodiment and used separately. Note that these connectors 35 are not used when the printer unit is connected to the PC module of this embodiment, and that control module 32 is connected to the PC module via a dedicated connector cable.

Case 40 of the PC module is in the shape of a substantially rectangular parallelepiped and is made of metal. Above the rear part of case 40 behind the control unit 32 a free space is formed and used for an expansion input-output unit 85 mounted on the rear side of a top cover 41 of case 40. Expansion unit 85 can, thus, be installed without any interference with other components. A connector group 44 is positioned on a rear surface 43 of case 40 and is used for connecting the PC module to devices other than the printer unit in top housing 10. Because the depth of case 40 is smaller than that of bottom housing 20, connector group 44 is displaced from rear edge 27 of housing 20 towards the front. This arrangement creates a space 28 in the rear part of housing 20, which can accommodate connection cables and their plugs. In combination with back cover 26 cables and plugs are protected even if apparatus 1 is installed tightly against a back wall or another device. Cables can be connected to expansion input-output unit 85 through said space 28.

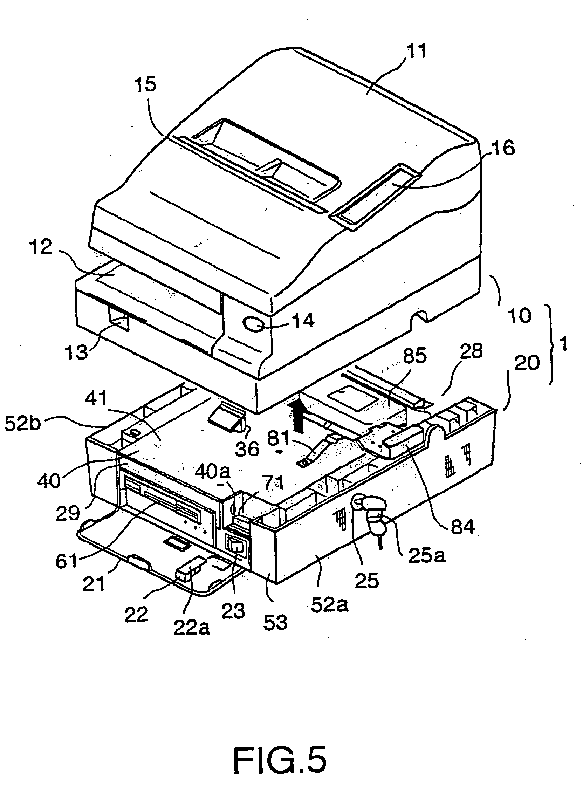

FIG. 4 and FIG. 5 show the method of separating top housing 10 from bottom housing 20. First, after back cover 26 is removed, locking mechanism 22 of lid 21 is released and lid 21 opened. Cable 36 which connects the printer unit to the PC module is then removed from connector 71. Next, key 25a is inserted into key hole 25 and used to release the locking mechanism holding bottom housing 20 and top housing 10 together. Then, by moving top housing 10 and bottom housing 20 slightly sideways to disengage top housing 10 from a hook 84 on bottom housing 20, top housing 10 can be removed from bottom housing 20. For installing top housing 10 onto bottom housing 20 the above procedure is reversed.

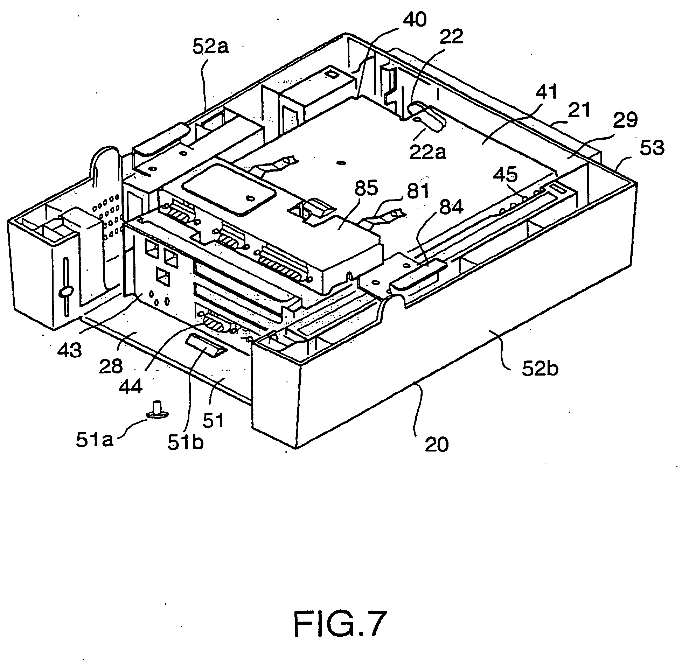

FIG. 7 is a top perspective view of bottom housing 20 after removal of top housing 10 and shows the state in which the PC module with its case 40 is housed inside bottom housing 20. In the present embodiment, bottom housing 20 and top housing 10 are both made of molded plastic. When the two housings are assembled, nearly the entire exterior of apparatus 1 will be formed by molded plastic components. Bottom housing 20 comprises a bottom 51 which is nearly rectangular, right and left side walls 52a and 52b which rise up from two opposite sides of bottom 51, and a front wall 53 which connects said side walls 52a and 52b. The rear end of housing 20 is left open, allowing the PC module to be inserted or extracted through this opening as will be explained below. The space between this opening and the rear end of case 40 is the space 28 mentioned above.

The PC module is inserted from the back along side walls 52a and 52b until the front face of its case 40 contacts the front panel 29 which forms a central part of front wall 53, i.e., the part covered by lid 21 when the latter is closed.. In this position, the rear edge of case 40 is latched by engagement with a tab 51b resiliently protruding from bottom 51. When this operation is completed, the front face of the disk drive unit 60 mounted in case 40 will be covered by front panel 29, as shown in FIG. 5. Lid 21 is pivotally mounted on the front face of front wall 53. Locking mechanism 22 is fixed to the inner face of lid 21 and comprises a metallic arm 22a which extends toward the interior of the apparatus. Arm 22a cooperates with a slit 40a provided in the front face of case 40. To lock lid 21 arm 22a is rotated into a predetermined position so that when lid 21 is subsequently closed arm 22a is able to enter slit 40a. Arm 22a is then turned, thereby simultaneously locking lid 21 and case 40 to each other via front panel 29.

When it is necessary to inspect or repair the PC module or to add or replace an expansion board for functional enhancements, the PC module must be extracted from bottom housing 20. In such a case, a key is used to unlock locking mechanism 22 by turning arm 22a into registration with slit 40a. When a metallic key is used for unlocking, the operator and case 40 become electrically connected via the key and the locking mechanism 22. This connection allows the electrostatic charge that may have accumulated in the operator's body to be discharged to case 40 before the same operator touches any of the electronic components inside case 40 in performing the above-mentioned operations, thus preventing possible damage due to electrostatic discharge. Likewise, when a floppy disk is to be inserted in or removed from the disk drive unit, the key is first used to open front lid 21, and thus damage to the data stored on the disk due to electrostatic discharge is prevented.

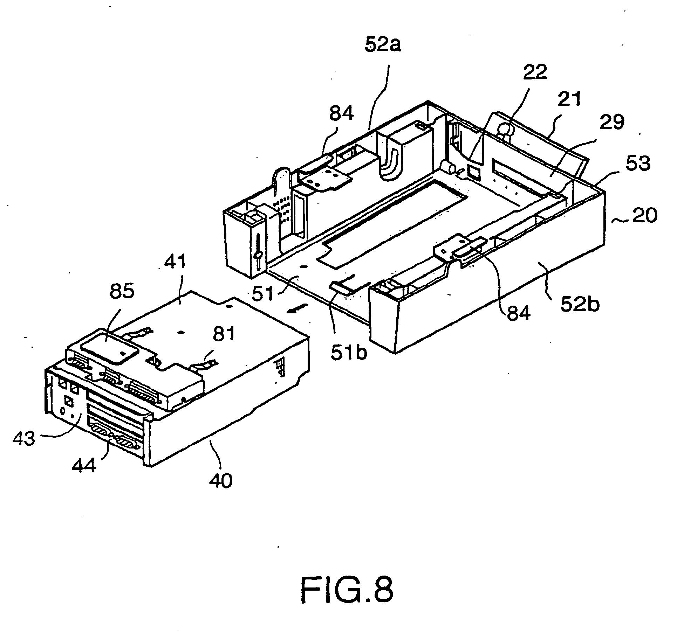

FIG. 8 shows the PC module extracted from bottom housing 20. To extract the PC module from the back of bottom housing 20, locking mechanism 22 is unlocked, as explained above. Then a screw 51a (see Fig. 7) is removed if it has been used to fasten case 40 to the lower housing 20, for instance, during shipment. Then, case 40 is pulled out toward the back while depressing tab 51b.

Because interface connectors of connector group 44 are concentrated and installed in rear surface 43 of case 40 in the present embodiment, cables connected to the interface connectors do not interfere with bottom housing 20, posing no obstacle to the extraction of case 40.

Although Fig. 8 shows the PC module being extracted with top housing 10 removed, the PC module can be extracted while top housing 10 is engaged with bottom housing 20. This is because top housing 10 is supported by side walls 52 of bottom housing 20, which extend approximately parallel to each other and between which the PC module with its case 40 can be housed.

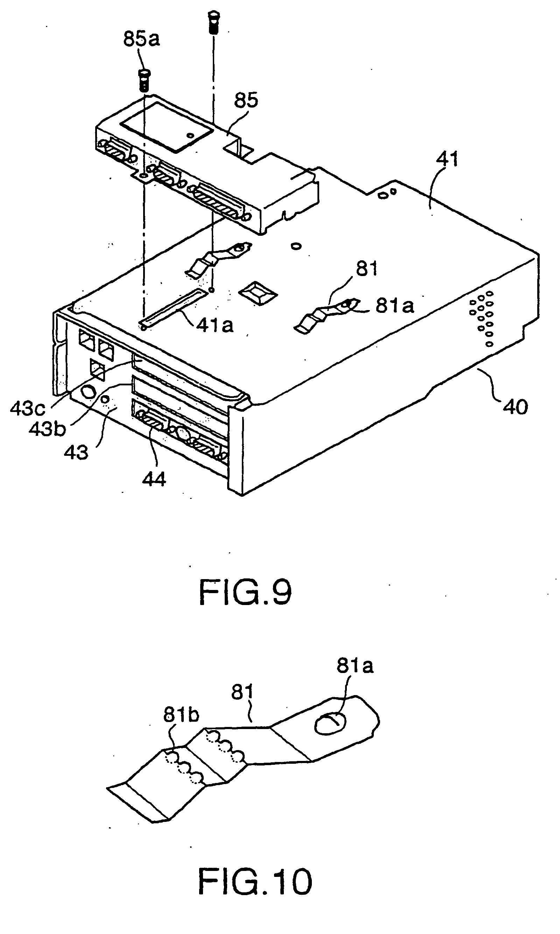

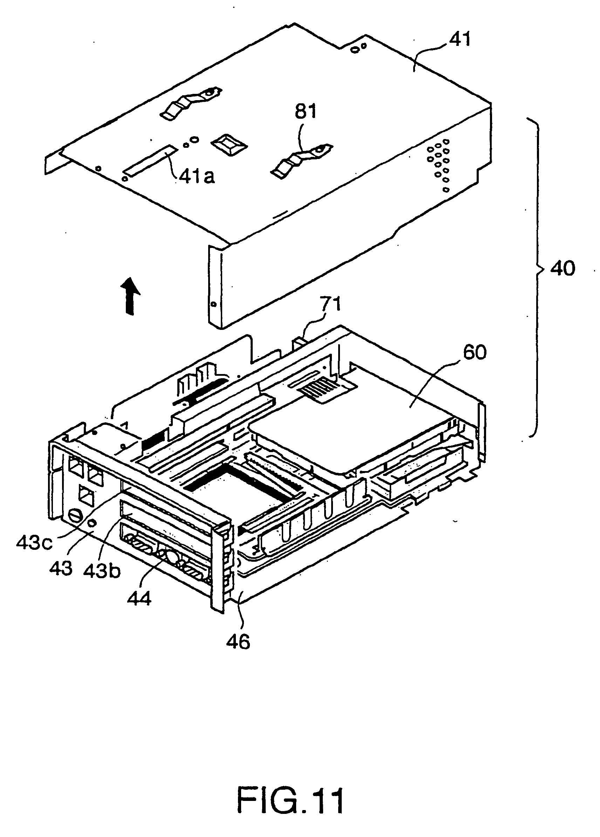

FIG. 9 is a top-view of case 40, Fig. 11 shows the PC module with a top cover 41 of its case 40 disassembled. As shown in FIG. 11, case 40 comprises top cover 41 which covers the top and the left side, and a bottom cover 46 which covers the bottom, front, back, and the right side. By surrounding the boards of the PC module, metallic case 40 acts as an electromagnetic noise shield. The case is grounded to the reference potential of the boards. On the outer side of top cover 41 elastic metallic contact plates 81 are mounted. As will be explained below, contact plates 81 are shaped so as not to interfere with the insertion and extraction of case 40. In the assembled state of apparatus 1, contact plates 81 contact bottom cover 34 of control module 32 such that control module 32 and the printer mechanism connected to it are grounded to case 40. This grounding avoids electrostatic problems in the printer unit. Rear surface 43 of case 40 is provided with standard interface connectors (connector group 44) which are used for connecting external devices such as a display, a keyboard, and a telephone line. By adding expansion boards, it is possible to add an external hard disk or to connect other PCs and/or a PC network. For this reason, two expansion slots 43b and 43c are provided to enable connection to the connectors of said expansion boards through case 40.

Connector slot 41a, which is used for connecting expansion input-output unit 85, is provided in the middle of the rear part of top cover 41. Expansion input-output unit 85 is connected to the PC module through the insertion of connector pins (not shown in the figure) which extend downward from unit 85, into connector slot 41a; in this state input-output unit 85 is directly secured to top cover 41 via screw 85a (Fig. 9). Expansion input-output unit 85 expands standard interface connectors and is used for connecting such additional devices as a page printer and a scanner.

Contact plates 81, which contact control module 32 and which ground the printer mechanism and control module 32, are installed on two sides of the top surface of case 40 using screws 81a. It is preferable that screws 81a be made of a conductive material.

FIG. 10 shows a magnified view of one contact plate 81. Contact plates 81 in the present embodiment consist of a metal plate bent into an M like shape. Semi-spherical protrusions 81b are formed on the two apexes through drawing. Each contact plate 81 is fixed at one end by a respective screw 81a. In an unbiased state, i.e., when case 40 is removed from lower housing 20, contact plates 81 project from top cover 41 upward by a length larger than the gap between top cover 41 of case 40 and bottom cover 34 of control module 32. When case 40 is being inserted into or removed from housing 20, contact plates 81 are, therefore, elastically deformed with their free ends sliding along top cover 41, and, thus, do not interfere with the movement of case 40. Compared to a case where the free end does not abut against the top cover, the sliding resistance of the free end has the effect of increasing the deformation load, i.e., the contact load applied to the bottom cover 34. Contact plates 81 thereby ensure solid contact with bottom cover 34. Furthermore, contact plates 81 suffer very little plastic deformation because they contact case 40 at three points, i.e., two edges and the trough area, over which stress is distributed.

To reduce the contact resistance between semi-spherical protrusions 81b and bottom cover 34, sufficient contact pressure is required. For example, even if an oil film or oxidation film is present on the contact surface, high contact pressure and sliding motions will eliminate the film, thus ensuring excellent and reliable contact.

In the present embodiment, the semi-spherical protrusions 81b are forced to slide along bottom cover 34 when contact plate 81 is deformed by the load applied at the semi-spherical protrusions 81b. Consequently, the frictional force between semi-spherical protrusions 81b and bottom cover 34 opposes deformation of the contact plate 81, thus, increasing the deformation load, i.e., the contact pressure. Furthermore, because the contact area between each semi-spherical protrusion 81b and bottom cover 34 is small, a high contact pressure is achieved. Furthermore, since there are multiple protrusions 81b on each contact plate 81a low contact resistance is ensured even if, for instance, due to oxidation a protrusion is unable to provide a good electrical contact. Additionally, the use of semi-spherical protrusions 81b prevents the sliding movements from causing excessive wear or gouging in the contact area, and also prevents the generation of troublesome metallic powder.

The present invention is not limited to a semi-spherical shape of the protrusions 81b. Any shape can be used as long as it possesses a small contact area and enables smooth sliding movements. For example, cylindrical protrusions extending substantially perpendicular to the sliding direction and having axes parallel to bottom cover 34 would produce similar effects.

### Embodiment 2

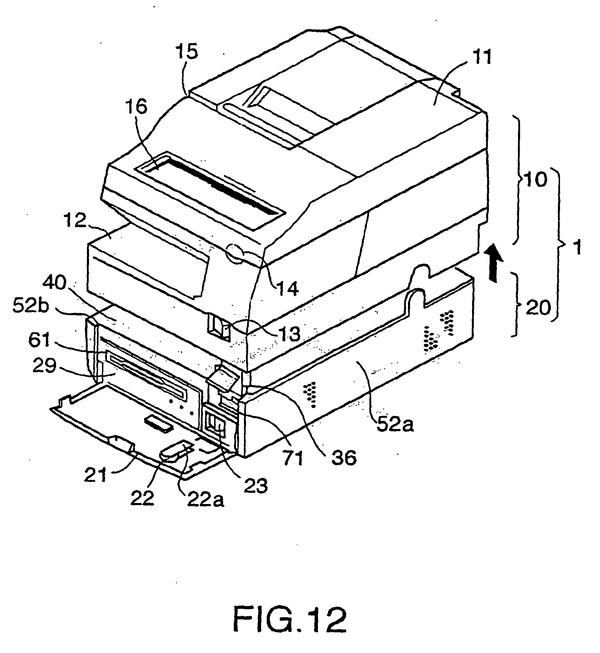

FIG. 12 shows an example of an information processing apparatus in which a printer mechanism smaller than that of the previous first embodiment is used. This printer mechanism is equipped with only one roll of paper and can print journals, receipts, and slips. The width of the apparatus 1 of this second embodiment is narrower than that of the first embodiment because of the smaller printer mechanism.

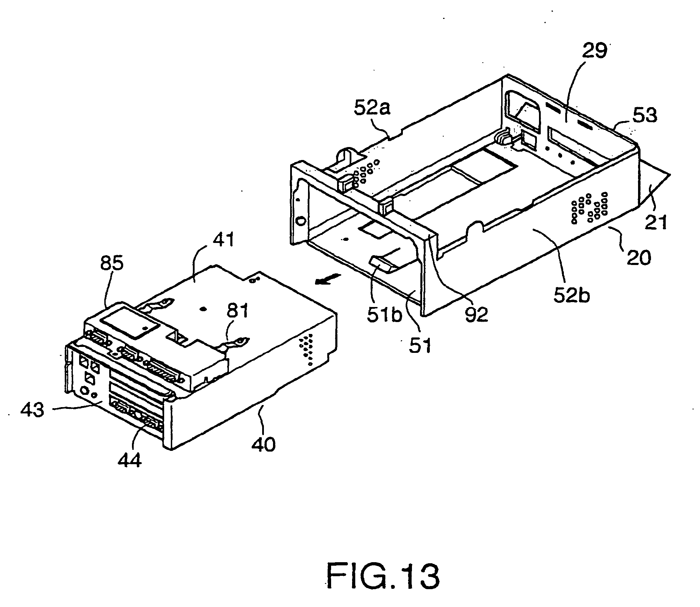

FIG. 13 shows the PC module extracted from bottom housing 20. Here, case 40 of the PC module is the same as that used in the first embodiment. In other words, case 40 is designed to match the narrower width so that the PC module and case of the same specifications can be used even when the width of top housing 10 is reduced. In the present second embodiment, in order to allow for a width of case 40 as wide as possible, side walls 52a and 52b of bottom housing 20 are made of a single plastic plate, providing a large space inside the housing. In order to increase the strength of side walls 52a and 52b, a bridge-shaped beam 92 connects these walls.

As explained above, case 40 used in the information processing apparatus of the second embodiment is identical to that used in the first embodiment, and thus a detailed explanation is omitted. Furthermore, the configurations of the top and bottom housings are nearly identical; like numerals are used to represent like parts. Although the apparatus in the second embodiment is smaller to match the smaller printer, its design concept is the same as that used for the information processing apparatus in the first embodiment, e.g., case 40 can be extracted toward the back with cables intact. Therefore, as in the first embodiment, the information processing apparatus in the second embodiment is characterized in that maintenance, parts replacement, and installation of expansion boards can be easily performed.

## Claims

1. An information processing apparatus comprising:
a first housing (10);
a second housing (20) containing an information processing module;
a printer unit; and
connection means for detachably connecting said first and second housings;
wherein said second housing (20) has a rear end left open and said information processing module comprises
- a case (40) of a conductive material arranged such that said information processing module can be inserted into and extracted from said second housing through said open rear end, and
- grounding means (81) fixed to at least one of said case and said printer unit on a surface thereof which is parallel to said insertion direction and adapted to electrically connecting said case (40) and said printer unit so as to ground said case (40) to a reference electric potential of said information processing device;
**characterized in that**
the printer unit is contained in the first housing (10); and
the first housing is disposed on top of the second housing and has its lower side substantially matching in shape with the upper side of the second housing; wherein
said grounding means (81) is elastically biassed toward the respective other one of said case and said printer unit so as to slide along an opposing surface of said respective other one of case and printer unit when said information processing module is being mounted in or removed from said second housing (20); and
said grounding means (81) comprises a roughly M-shaped metal plate with one of its legs used for fixing it to said surface of the case or said printer unit, the other leg used as a free end slidingly supported by said surface, and at least one of its top areas used as a contact portion for contacting said opposing surface, said contact portion being provided with at least one semi-spherical protrusion (81b).

2. The apparatus according to Claim 1, wherein said case (40) is provided with an interface connector (44) on its back for connecting an external device, and wherein a space (28) for housing both said interface connector and a connector to be connected to said interface connector is provided behind said case inside said second housing (20) when the information processing module is mounted in the second housing.

3. The apparatus according to Claim 1 or 2, wherein said second housing (20) comprises:
a lid (21) provided with a locking mechanism (22) activated by key, and
a housing panel (29) installed in the front of said case (40) in the insertion direction, which supports said lid such that said lid can be opened in a direction away from said second housing (20);
wherein said locking mechanism comprises engaging means (22a) which, in a locked state, engages with said case, thereby simultaneously preventing the extraction of said case and the opening of said lid, and which, in an unlocked sate , is disengaged from said case, allowing the extraction of said case and the opening of said lid.

4. The apparatus according to Claim 3, wherein said engaging means (22a) and said key are made from a conductive material, and said key, said engagement means, and said case (40) become electrically connected with each other when said key is inserted in the locked state.

## Patentansprüche

1. Datenverarbeitungsvorrichtung, aufweisend:
ein erstes Gehäuse (10);
ein zweites Gehäuse (20), welches ein Datenverarbeitungsmodul enthält;
eine Druckereinheit; und
eine Verbindungseinrichtung zum lösbaren Verbinden des ersten und zweiten Gehäuses;
wobei das zweite Gehäuse (20) ein offen gelassenes, hinteres Ende hat und das Datenverarbeitungsmodul folgendes aufweist:
einen Behälter (40) aus leitfähigem Werkstoff, welcher so gestaltet ist, daß das Datenverarbeitungsmodul durch das offene, hintere Ende in das zweite Gehäuse eingesetzt und aus ihm entnommen werden kann und
eine Erdungseinrichtung (81), die an mindestens einem von beiden, dem Behälter und der Druckereinheit, an einer zur Einführungsrichtung parallelen Oberfläche desselben/derselben befestigt und geeignet ist, den Behälter (40) und die Druckereinheit elektrisch zu verbinden, so daß der Behälter (40) auf ein elektrisches Bezugspotential des Datenverarbeitungsgeräts geerdet wird;
**dadurch gekennzeichnet, daß**
die Druckereinheit in dem ersten Gehäuse (10) enthalten ist; und das erste Gehäuse oben auf dem zweiten Gehäuse angeordnet ist und seine untere Seite in der Gestalt im wesentlichen zu der oberen Seite des zweiten Gehäuses paßt; wobei
die Erdungseinrichtung (81) in Richtung zu dem jeweils anderen von beiden, Behälters und Druckereinheit, elastisch vorgespannt ist, um längs einer gegenüberliegenden Oberfläche des jeweils anderen der beiden, Behälter und Druckereinheit, zu gleiten, wenn das Datenverarbeitungsmodul in dem zweiten Gehäuse (20) angebracht oder von ihm entfernt wird; und
die Erdungseinrichtung (81) eine, grob gesagt, M-förmige Metallplatte aufweist, deren einer Schenkel zum Befestigen derselben an der Oberfläche des Behälters oder der Druckereinheit benutzt wird, während der andere Schenkel als ein freies Ende dient, welches von der Oberfläche gleitend abgestützt ist, und mindestens einer ihrer oberen Bereiche als Kontaktabschnitt zum Kontaktieren der gegenüberliegenden Oberfläche benutzt wird, wobei der Kontaktabschnitt mit mindestens einem halbkugelförmigen Vorsprung (81b) versehen ist.

2. Vorrichtung nach Anspruch 1, bei der der Behälter (40) mit einem Schnittstellenverbinder (44) an seiner Rückseite zum Anschluß eines externen Geräts versehen ist, und bei der ein Raum (28) zur Aufnahme sowohl des Schnittstellenverbinders als auch eines zum Anschluß des Schnittstellenverbinders und eines Verbinders hinter dem Behälter im Innern des zweiten Gehäuses (20) vorgesehen ist, wenn das Datenverarbeitungsmodul in dem zweiten Gehäuse angebracht ist.

3. Vorrichtung nach Anspruch 1 oder 2, bei der das zweite Gehäuse (20) folgendes aufweist:
einen Deckel (21), der mit einem mittels Schlüssel aktivierten Verriegelungsmechanismus (22) versehen ist, und
eine Gehäuseplatte (29), die an der Stirnseite des Behälters (40) in Einführungsrichtung eingebaut ist und den Deckel so abstützt, daß der Deckel in Richtung vom zweiten Gehäuse (20) weg geöffnet werden kann;
wobei der Verriegelungsmechanismus eine Eingriffseinrichtung (22a) aufweist, die in verriegeltem Zustand in das Behälter eingreift und **dadurch** gleichzeitig die Herausnahme des Behälters und das Öffnen des Deckels verhindert und in entriegeltem Zustand außer Eingriff mit dem Behälter steht, was die Herausnahme des Behälters und das Öffnen des Deckels ermöglicht.

4. Vorrichtung nach Anspruch 3, bei der die Eingriffseinrichtung (22a) und der Schlüssel aus einem leitfähigen Werkstoff gemacht sind, und der Schlüssel, die Eingriffseinrichtung und der Behälter (40) elektrisch miteinander verbunden sind, wenn der Schlüssel in verriegeltem Zustand eingesetzt ist.

## Revendications

1. Dispositif de traitement de l'information comprenant :
un premier logement (10) ;
un deuxième logement (20) contenant un module de traitement de l'information ;
une unité d'impression ; et
un moyen de connexion pour raccorder de manière amovible les premier et deuxième logements ;
dans lequel le deuxième logement (20) a une extrémité arrière ouverte et le module de traitement de l'information comprend
- un boîtier (40) constitué d'un matériau conducteur conçu de telle façon que le module de traitement de l'information puisse être inséré dans le deuxième logement et extrait de ce dernier par l'extrémité arrière ouverte, et
- un moyen (81) de mise à la terre fixé sur au moins l'un du boîtier et de l'unité d'impression sur une de ses surfaces qui est parallèle au sens d'insertion et adapté pour raccorder électriquement le boîtier (40) et l'unité d'impression afin de mettre à la terre le boîtier (40) sur un potentiel électrique de référence du dispositif de traitement de l'information ;
**caractérisé en ce que**
l'unité d'impression est logée dans le premier logement (10) ; et
le premier logement est disposé en haut du deuxième logement et son côté inférieur a une forme qui correspond sensiblement à la forme du côté supérieur du deuxième logement ; dans lequel
le moyen (81) de mise à la terre est sollicité de manière élastique vers l'autre respectif du boîtier et de l'unité d'impression de façon à coulisser le long d'une surface opposée de l'autre respectif du boîtier et de l'unité d'impression quand le module de traitement de l'information est installé dans le deuxième logement (20) ou retiré de celui-ci ; et
le moyen (81) de mise à la terre comprend une plaque métallique approximativement en forme de M dont l'un des pieds est utilisé pour le fixer sur la surface du boîtier ou de l'unité d'impression, l'autre pied étant utilisé comme extrémité libre supportée de manière coulissante par la surface, et au moins l'une de ses surfaces supérieures étant utilisée comme partie de contact afin de venir en contact avec la surface opposée, la partie de contact étant munie d'au moins une saillie (81b) hémisphérique.

2. Dispositif selon la revendication 1, dans lequel le boîtier (40) est muni d'un connecteur (44) d'interface à l'arrière afin de raccorder un dispositif extérieur, et dans lequel un espace (28) destiné à recevoir le connecteur d'interface et un connecteur devant être raccordé au connecteur d'interface est prévu derrière le boîtier à l'intérieur du deuxième logement (20) quand le module de traitement de l'information est installé dans le deuxième logement.

3. Dispositif selon la revendication 1 ou 2, dans lequel le deuxième logement (20) comprend :
un couvercle (21) muni d'un mécanisme (22) de verrouillage activé à l'aide d'une clé, et
un panneau (29) de logement installé à l'avant du boîtier (40) dans le sens d'insertion, qui supporte le couvercle de façon que celui-ci puisse être ouvert dans un sens s'éloignant du deuxième logement (20) ;
dans lequel le mécanisme de verrouillage comprend un moyen (22a) coopérant qui, dans un état verrouillé, coopère avec le boîtier, ce qui empêche simultanément l'extraction du boîtier et l'ouverture du couvercle, et qui, dans un état déverrouillé, est dégagé du boîtier, ce qui permet l'extraction du boîtier et l'ouverture du couvercle.

4. Dispositif selon la revendication 3, dans lequel le moyen (22a) coopérant et la clé sont constitués d'un matériau conducteur, et la clé, le moyen coopérant et le boîtier (40) sont alors raccordés électriquement les uns aux autres quand la clé est insérée dans l'état verrouillé.
